# EUROPEAN PATENT APPLICATION

(11) **EP 4 092 355 A1**
(43) Date of publication of application: **23.11.2022**
(21) Application number: 22172378.6
(22) Date of filing: 09.05.2022
(51) Int. Cl.: F25B 13/00, F25B 49/02, F25B 25/00

(54) **HEAT PUMP TYPE HEAT SOURCE APPARATUS**

(30) Priority: 19.05.2021 JP 2021084431
(71) Applicant: Toshiba Carrier Corporation, Kawasaki-Shi, Kanagawa 212-8585 (JP)
(72) Inventor: WATANABE, Shinya, Shizuoka-ken, 416-8521 (JP); SUGA, Tooru, Shizuoka-ken, 416-8521 (JP)
(74) Representative: Gramm, Lins & Partner Patent- und Rechtsanwälte PartGmbB

(57) **Abstract**

A heat pump type heat source apparatus includes a refrigeration cycle provided with a compressor, a first heat exchanger, an expansion device and a second heat exchanger, a heat-medium flow passage connected to the first heat exchanger as a flow passage of a heat medium circulating between the first heat exchanger and a utilization-side device, a discharge temperature sensor provided in piping on a discharge side of the compressor and detects a discharge temperature, a first-heat-exchanger outlet-side temperature sensor configured to detect a temperature of a heat-exchanged refrigerant flowing out of the first heat exchanger, and a controller configured to stop the compressor when a difference obtained by subtracting the temperature of a heat-exchanged refrigerant from the discharge temperature is smaller than a predetermined temperature value after elapse of a predetermined waiting time from start-up of the compressor.

## Description

### TECHNICAL FIELD

Embodiments of the present invention relate to a heat pump type heat source apparatus.

### BACKGROUND

In the case of a refrigeration apparatus provided with a heat pump type refrigerating cycle, when the discharge pressure of its compressor becomes a high pressure above a predetermined value, the refrigerating cycle components such as a compressor may fail. For this reason, the discharge pressure of the compressor is detected by a pressure sensor, and the compressor is stopped in advance. However, the pressure sensor is expensive and need to be connected to the refrigeration cycle, resulting in poor manufacturability and complicated cycle configuration.

In a known refrigeration apparatus, in principal, when the discharge temperature of the compressor being basically proportional to the discharge pressure of the compressor reaches a predetermined temperature or higher, the refrigeration apparatus determines that the discharge pressure of the compressor has risen abnormally and stops the operation of the compressor after a slight time delay due to the delay in temperature response. In such a refrigeration apparatus, the discharge temperature of the compressor is generally detected by a discharge temperature sensor such as a thermistor attached to a discharge pipe of the compressor. However, the discharge temperature sensor can be attached to and detached from the outer circumference of the cylindrical discharge pipe, and is mechanically fixed with a fixture such as a clip so that heat can be conducted from the discharge pipe. Thus, this discharge temperature sensor may fall off from the discharge pipe due to vibration and/or disturbance. If the discharge temperature sensor falls off from of the discharge pipe, the discharge temperature of the compressor cannot be detected, and the state of the abnormally high pressure cannot be determined correctly.

For this reason, it is considered to provide an abnormality countermeasure means of the refrigeration apparatus for determining whether the discharge temperature sensor has fallen off or not. This abnormality countermeasure means acts as follows. When the difference between the detection value of the discharge temperature sensor at the time of starting the compressor and the detection value of the discharge temperature sensor after elapse of a predetermined time from the start-up of the compressor is equal to or less than the predetermined temperature value, the dropout state of the discharge temperature sensor is detected and the refrigeration apparatus is stopped as being in an abnormal state.

[Patent Document 1] JP H05-099543 A

The conventional refrigeration apparatus detects the dropout state of the discharge temperature sensor on the basis of the detection value of the discharge temperature sensor or its time change. However, when the discharge temperature sensor falls off, the discharge temperature sensor drops near the compressor. Thus, the detection temperature of the discharge temperature sensor is affected by the temperature rise of the compressor surface due to the operation of the compressor. Hence, even after the discharge temperature sensor falls off, the detection temperature of the discharge temperature sensor rises due to the temperature rise of the compressor, which may lead to a failure of the refrigeration cycle components if the dropout of the discharge temperature sensor is not detected depending on the atmospheric temperature of the discharge temperature sensor before start-up of the compressor (i.e., the outside air temperature), the dropout position of the discharge temperature sensor, or the temperature rise of the compressor.

### Summary of the Invention

An object of the present invention is to provide a heat pump type heat source apparatus that can more reliably detect the dropout of the discharge temperature sensor for detecting the discharge temperature of the compressor by using an existing temperature sensor in the heat pump type heat source apparatus.

To achieve the above object, an aspect of the present invention provides a heat pump type heat source apparatus comprising: a refrigeration cycle that includes a compressor, a first heat exchanger, an expansion device, and a second heat exchanger; a heat-medium flow passage that is connected to the first heat exchanger of the refrigeration cycle as a flow passage of a heat medium circulating between the first heat exchanger and a utilization-side device; a discharge temperature sensor that is provided in piping on a discharge side of the compressor and detects a discharge temperature; a first-heat-exchanger outlet-side temperature sensor configured to detect a temperature of a heat-exchanged refrigerant flowing out of the first heat exchanger; and a controller configured to stop the compressor when a difference obtained by subtracting the temperature of a heat-exchanged refrigerant from the discharge temperature is smaller than a predetermined temperature value after elapse of a predetermined waiting time from start-up of the compressor.

### BRIEF DESCRIPTION OF THE DRAWINGS

In the accompanying drawings:
Fig. 1 is a block diagram of a heat pump type heat source apparatus according to one embodiment of the present invention;
Fig. 2 is a TH diagram of the heat pump type heat source apparatus according to the embodiment of the present invention;
Fig. 3 is a graph illustrating temperature transition of the heat pump type heat source apparatus according to the embodiment of the present invention from the time before and after its start-up to the time immediately before a stable operation;
Fig. 4 is a graph illustrating another case of temperature transition of the heat pump type heat source apparatus according to the embodiment of the present invention from the time before and after its start-up to the time immediately before a stable operation; and
Fig. 5 is a flowchart showing the control related to the discharge temperature sensor, which is executed by the heat pump type heat source apparatus according to the embodiment of the present invention.

### DETAILED DESCRIPTION

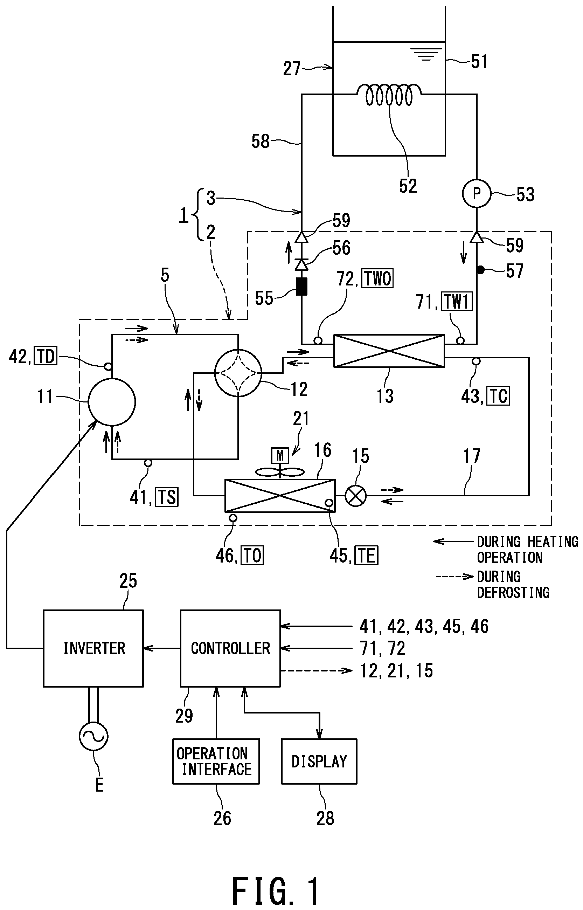

Hereinbelow, embodiments of a heat pump type heat source apparatus (i.e., heat-medium circulation type heat pump apparatus) according to the present invention will be described by referring to Fig. 1 to Fig. 5. The same reference signs are given for identical or equivalent components in each figure.

Fig. 1 is a block diagram of a heat pump type heat source apparatus 1 according to one embodiment of the present invention;

As shown in Fig. 1, the heat pump type heat source apparatus 1 according to the present embodiment includes: a heat source unit 2 that exchanges heat between a circulating refrigerant and the outside air and exchanges heat between the circulating refrigerant and a circulating heat medium; and a load unit 3 that circulates and uses the heat medium warmed by the heat source unit 2.

In the following description, the heat pump type heat source apparatus 1 is shortly referred to as a heat pump apparatus 1.

The heat source unit 2 includes a refrigeration cycle 5. The refrigeration cycle 5 includes: a compressor 11; a four-way valve 12; a first heat exchanger 13; an expansion valve 15 as an expansion device; a second heat exchanger 16; and refrigerant piping 17 that connects the compressor 11, the four-way valve 12, the first heat exchanger 13, the expansion valve 15, and the second heat exchanger 16 in sequence. The refrigeration cycle 5 circulates the refrigerant through the compressor 11, the four-way valve 12, the first heat exchanger 13, the expansion valve 15, and the second heat exchanger 16 via the refrigerant piping 17. The refrigerant circulating in the refrigeration cycle 5 is, for example, R410A or R32.

When heating the heat medium, the refrigeration cycle 5 sets the flow direction of the refrigerant flowing through the refrigerant piping 17 in such a manner that the first heat exchanger 13 functions as a condenser and the second heat exchanger 16 functions as an evaporator. In other words, the refrigeration cycle 5 switches the four-way valve 12 in such a manner that the refrigerant circulates in the order of the compressor 11, the four-way valve 12, the first heat exchanger 13, the expansion valve 15, the first heat exchanger 13, the four-way valve 12, and the compressor 11.

The compressor 11 includes: a high-pressure container; a compression mechanism housed in the high-pressure container; and a DC brushless motor that is housed in the high-pressure container and drives the compression mechanism. The compressor 11 compresses the refrigerant by using the compression mechanism so as to boost its pressure, and discharges the refrigerant in a high-temperature and high-pressure state. The compressor 11 can change its operating frequency by known inverter control. The amount of heat to be transferred to the high temperature portion increases by increasing the rotation speed of the compressor 11, and the amount of heat to be transferred to the high temperature portion decreases by decreasing the rotation speed.

The first heat exchanger 13 is also called a water heat exchanger. The first heat exchanger 13 exchanges heat between the refrigerant circulating in the heat source unit 2 and the heat medium circulating in the load unit 3.

The expansion valve 15 is, for example, an electronic expansion valve (PMV: Pulse Motor Valve). The opening degree of the expansion valve 15 is adjusted depending on the state of the refrigeration cycle. The expansion valve 15 is disposed in the refrigerant piping 17 in series between the first heat exchanger 13 and the second heat exchanger 16. The expansion valve 15 decompresses the refrigerant and causes the refrigerant in a low temperature and low pressure state to flow out.

The second heat exchanger 16 is also called an air heat exchanger. The second heat exchanger 16 exchanges heat between the refrigerant in the refrigerant piping 17 and the atmosphere of the second heat exchanger 16, usually the outside air.

The heat source unit 2 includes: a blower fan 21 that is installed near the second heat exchanger 16 and sucks in air from the side of the second heat exchanger 16 so as to blow out the outside air subjected to heat exchange in the second heat exchanger 16; a plurality of temperature sensors that detect the temperatures of the respective portions of the refrigeration cycle 5; a three-phase inverter 25 that is connected to a commercial AC power supply E and drives the DC brushless motor of the compressor 11 at variable speeds; an operation interface 26 that is an input device configured to receive operations by a user; a display 28 that displays the contents of settings as operating conditions and the operating state of the heat source unit 2 and the utilization-side device 27; and a controller 29 that controls the operation of the heat source unit 2 and the operation of the utilization-side device 27 on the basis of the user's operation on the operation interface 26.

The plurality of temperature sensors provided on respective portions include: a suction temperature sensor 41 that is provided in the refrigerant piping 17 on the suction side of the compressor 11 and detects the temperature TS of the refrigerant to be sucked into the compressor 11; a discharge temperature sensor 42 that is detachably attached to the refrigerant piping 17 on the discharge side of the compressor 11 with a fixture such as a clip as in the conventional technique and detects the temperature TD of the refrigerant to be discharged from the compressor 11; a refrigerant-outlet-side temperature sensor 43 that is provided in the refrigerant piping 17 and detects the temperature TC (condensation temperature) of the heat-exchanged refrigerant flowing out of the first heat exchanger 13; a refrigerant temperature sensor 45 that is provided in the second heat exchanger 16 and detects the temperature TE (i.e., evaporation temperature) of the refrigerant flowing through the second heat exchanger 16; and an outside-air temperature sensor 46 configured to detect the outside air temperature TO.

The outside-air temperature sensor 46 is provided in the second heat exchanger 16. The outside-air temperature sensor 46 is located on the upstream side of the second heat exchanger 16 in the ventilation direction of the blower fan 21 in order to accurately detect the outside air temperature.

The heat source unit 2 is not provided with a pressure sensor that detects the pressure of the refrigerant circulating in the refrigeration cycle 5.

The load unit 3 includes: the first heat exchanger 13 shared by the load unit 3 and the heat source unit 2; a utilization-side device such a hot water tank 51; and a utilization-side heat exchanger 52 that exchanges heat between the liquid (hot water) in the hot water tank 51 and the heat medium having been subjected to heat exchange in the first heat exchanger 13.

The heat medium circuit is a closed circuit. The heat medium circuit includes: a circulation pump 53 configured to circulate the heat medium; a constant flow valve 55 configured to keep the circulation flow rate of the heat medium constant; a check valve 56 configured to prevent backflow of the heat medium; a hot water tank 51; a flowmeter 57; and a heat-medium flow passage 58 that connects the first heat exchanger 13 so as to circulate water as the heat medium. Although the heat medium is water in general, antifreeze may be used to prevent freezing.

The user of the heat pump apparatus 1 inputs a desired setting temperature in the load unit 3 via the operation interface 26. The heat pump type heat source apparatus 1 is used for keeping the liquid, which is exemplified by hot water in the hot water tank 51 to be used externally, at a high temperature at all times in the load unit 3. Thus, the setting temperature of the heat medium to be set via the operation interface 26 is determined by the request on the side of using the hot water. This setting temperature is, for example, 40°C to 60°C, which is higher than the setting temperature of the air conditioner for heating.

The circulation pump 53 circulates the heat medium between the first heat exchanger 13 and the utilization-side device 27 by operation. The circulation pump 53, the constant flow valve 55, the check valve 56, and the flowmeter 57 may be provided in the heat-medium flow passage 58 on the side of the load unit 3 or may be provided in the heat-medium flow passage 58 on the side of the heat source unit 2. When the refrigerant circulating in the refrigerant piping 17 is hotter than the heat medium circulating in the heat-medium flow passage 58, the heat medium is heated by the first heat exchanger 13, then heats the water in the hot water tank 51 by the utilization-side heat exchanger 52 (i.e., radiator), and then dissipates heat so as to be returned to the first heat exchanger 13.

The heat-medium flow passage 58 includes a plurality of pipe joints 59. These piping joints 59 detachably connect the heat source unit 2 and the load unit 3.

In order to control the temperature of the heat medium, the heat source unit 2 includes: a heat-medium inlet temperature sensor 71 that is disposed on the inlet side of the first heat exchanger 13 and detects the temperature TWI of the heat medium flowing into the first heat exchanger 13; and a heat-medium outlet temperature sensor 72 that is disposed on the outlet side of the first heat exchanger 13 and detects the temperature TWO of the heat medium flowing out of the first heat exchanger 13. The temperature TWI is the temperature of the heat medium before heat exchange with the refrigerant of the refrigeration cycle 5 in the first heat exchanger 13, i.e., is return water temperature. The temperature TWO is the temperature of the heat medium after heat exchange with the refrigerant of the refrigeration cycle 5 in the first heat exchanger 13.

The load unit 3 may include a flowmeter 57 configured to detect the flow rate of the heat medium circulating in the heat-medium flow passage 58. The circulation flow rate of the heat medium, instead of the one detected by the flowmeter 57, may be a flow rate to be stored in advance corresponding to the rotation speed of the circulation pump 53, may be a flow rate to be set by manual input, or may be a correction value to be corrected when a change occurs during operation at the estimated flow rate.

The controller 29 includes hardware resources such as a processor, a memory, and its peripheral circuit. The controller 29 is composed of a computer that causes its processor to execute various programs so as to perform information processing of software using the hardware resources.

In addition, the controller 29 controls the operation of the heat source unit 2 and the operation of the load unit 3 on the basis of the input operation via operation interface 26. In other words, the controller 29 controls the operation of the compressor 11, the inverter 25, the four-way valve 12, the expansion valve 15, and the blower fan 21 on the basis of the user's input operation via the operation interface 26.

The controller 29 controls the shutdown of the compressor 11, the rotation speed of the compressor 11, the direction of the four-way valve 12, the opening degree of the expansion valve 15, the shutdown of the lower fan 21, and the rotation speed of the lower fan 21 on the basis of at least one of the detected or calculated circulating flow rate of the heat medium and the detected temperature values of the respective portions measured by the suction temperature sensor 41, the discharge temperature sensor 42, the refrigerant-outlet-side temperature sensor 43, the refrigerant temperature sensor 45, the outside-air temperature sensor 46, the heat-medium inlet temperature sensor 71, and the heat-medium outlet temperature sensor 72. For example, the rotation speed of the compressor 11, i.e., the output frequency of the inverter 25 is determined depending on the difference between the detected temperature of the heat-medium outlet temperature sensor 72 and the setting temperature of the heat medium having been set by the operation interface 26. In addition, the condensation temperature, which is the detection temperature of the refrigerant-outlet-side temperature sensor 43, is used for preventing the refrigeration cycle components such as the first heat exchanger 13 from becoming abnormally high pressure, for example. In other words, when the condensation temperature equivalent to the detection temperature of the refrigerant-outlet-side temperature sensor 43 exceeds a predetermined value such as 65°C, the rotation speed of the compressor 11 is decreased.

In order to remove the frost generated in the second heat exchanger 16 during the operation of heating the heat medium in the first heat exchanger 13, the refrigeration cycle 5 switches the flow direction of the refrigerant flowing through the refrigerant piping 17 by using the four-way valve 12 so as to perform defrosting operation. When performing the defrosting operation, the heat pump apparatus 1 inverts the four-way valve 12 such that the flow of the refrigerant is generated in the refrigeration cycle 5 in the direction opposite to the flow of the refrigerant heating the heat medium. In other words, the refrigeration cycle 5 circulates the refrigerant in the order of the compressor 11, the four-way valve 12, the second heat exchanger 16, the expansion valve 15, the first heat exchanger 13, the four-way valve 12, and the compressor 11. During this defrosting operation, the second heat exchanger 16 functions as a condenser and the first heat exchanger 13 functions as an evaporator. The second heat exchanger 16 functioning as a condenser dissolves the frost attached to the surface.

For warm regions where the defrosting operation is not required, the refrigeration cycle 5 may be dedicated to heating water without the four-way valve 12. In this case, the discharge side of the compressor 11 is connected to the first heat exchanger 13 via the refrigerant piping 17, and the suction side of the compressor 11 is connected to the second heat exchanger 16 via the refrigerant piping 17.

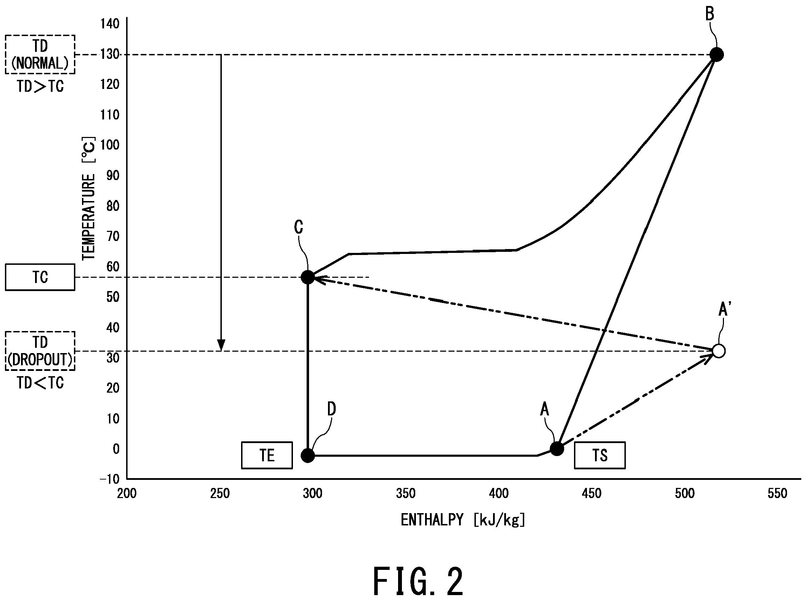

Fig. 2 is a TH diagram indicating temperature along the vertical axis and enthalpy along the horizontal axis, in the case where the operation of the heat pump type heat source apparatus according to the embodiment of the present invention is stable.

When the heat medium is heated in the refrigeration cycle 5 of the heat pump apparatus 1 according to the present embodiment as shown in Fig. 2, the compressor 11 compresses the refrigerant from the point A to the point B, the first heat exchanger 13 as a condenser warms the heat medium so as to cause the refrigerant to dissipate heat from the point B to the point C, the expansion valve 15 adiabatically expands the refrigerant from the point C to the point D, and the second heat exchanger 16 as an evaporator causes the refrigerant to absorb heat from the point D to the point A.

In this process, the suction temperature sensor 41 of the heat source unit 2 detects the temperature TS of the refrigerant at the point A, the discharge temperature sensor 42 detects the temperature TD of the refrigerant at the point B, the refrigerant-outlet-side temperature sensor 43 detects the temperature TC of the refrigerant at the point C, and the refrigerant temperature sensor 45 detects the temperature TE of the refrigerant at the point D.

The temperature TD at the point B is the temperature of the refrigerant immediately after being discharged from the compressor 11. Both the temperature (vertical axis) and enthalpy (horizontal axis) at the point B are the highest in the refrigeration cycle 5. The temperature TC at the point C is the temperature of the refrigerant after passing through the first heat exchanger 13 which is a condenser and also a water heat exchanger. The temperature and enthalpy at the point C are lower than the temperature and enthalpy at the point B due to heat transfer from the refrigerant circulating in the refrigeration cycle 5 to the heat medium circulating in the load unit 3. In other words, when the operation of the refrigeration cycle 5 is stable, the relationship of "temperature TD > temperature TC" is established.

When the discharge temperature sensor 42 falls off, the temperature TD to be detected by the discharge temperature sensor 42 moves to the point A'. The temperature at the point A', i.e., the temperature TD to be detected by the dropped discharge temperature sensor 42 is not the actual temperature of the refrigerant discharged from the compressor 11 but substantially corresponds to the outside air temperature. In general, the outside air temperature is lower than the temperature of the refrigerant immediately after being discharged from the compressor 11. Thus, when the operation of the refrigeration cycle 5 is stable, it can be determined, by detecting the relationship of "temperature TD < temperature TC", that the discharge temperature sensor 42 has fallen off from the discharge pipe. Hence, in order to inexpensively detect the dropout (i.e., falling or to be unintentionally detached) of the discharge temperature sensor 42 by using at least one temperature sensor already provided in the refrigeration cycle 5, it can be seen that use of the detection temperature TC of the refrigerant temperature sensor 43 is effective.

However, especially in the case of the heat pump type heat source apparatus 1, in the unstable period of the refrigeration cycle 5, for example, in a transitional period such as the period immediately after the start-up (i.e., activation) of the refrigeration cycle 5, the method of only detecting the relationship of "temperature TD < temperature TC" may erroneously determine the dropout of the discharge temperature sensor 42. Thus, it is preferred that countermeasures for such a misdetection are provided.

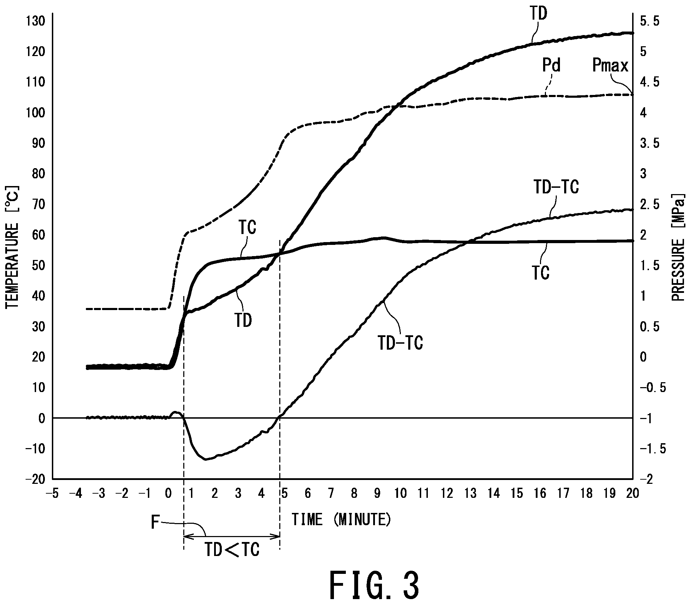

Fig. 3 illustrates temperature transition of the heat pump type heat source apparatus according to the embodiment of the present invention from the time immediately before its start-up to the time immediately before the stable operation. In Fig.3, the time on the horizontal axis is shown with time t=0 as a reference at the start-up of the operation of the compressor 11.

As shown in Fig. 3, immediately after the start-up of the refrigeration cycle 5, the temperature TD of the refrigerant immediately after being discharged from the compressor 11 may be lower than the temperature TC of the refrigerant after passing through the first heat exchanger 13 as denoted by the solid arrow region F in Fig. 3. That is, regardless of whether the discharge temperature sensor 42 has fallen off or not, the temperature relationship of "temperature TD < temperature TC" becomes apparent in the solid arrow region F immediately after the start-up of the refrigeration cycle 5. Such a temperature relationship is a problem peculiar to the heat pump type heat source apparatus 1 in which the refrigerant is warmed due to heat transfer from the heat medium circulating in the load unit 3 in the first heat exchanger 13 to the refrigerant beginning to circulate in the reflection cycle 5 by the start-up of the compressor 11, under the condition where the temperature of the heat medium circulating in the load unit 3 is higher than the temperature of the refrigerant circulating in the refrigeration cycle 5.

Thus, when the relationship of "temperature TD < temperature TC" is simply detected in the solid arrow region F immediately after the start-up of the refrigeration cycle 5, the dropout of the discharge temperature sensor 42 is erroneously determined in some cases.

Hence, after elapse of a predetermined waiting time from the start-up of the compressor 11, the controller 29 of the heat pump apparatus 1 according to the present embodiment determines whether the discharge temperature sensor 42 has fallen off from the pipe on the discharge side of the compressor 11 or not. In this manner, the controller 29 can more accurately determine whether the discharge temperature sensor 42 has fallen off or not.

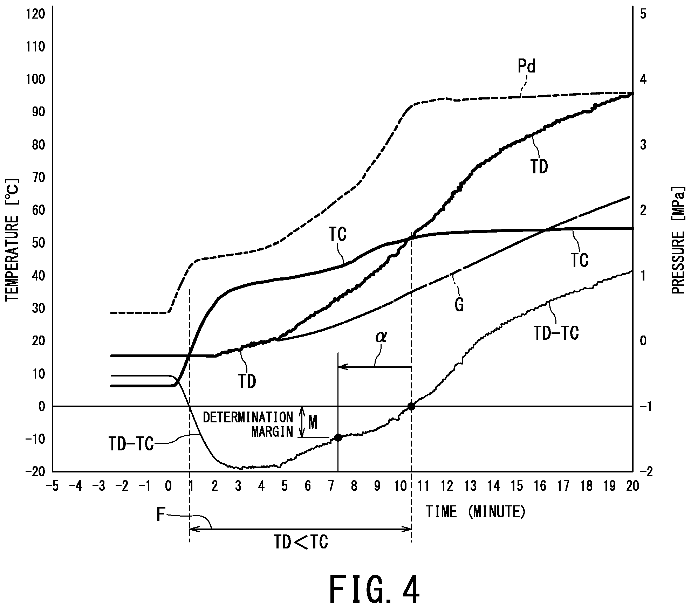

Fig. 4 illustrates another case of the temperature transition of the heat pump type heat source apparatus according to the embodiment of the present invention from the time immediately before its start-up to the time immediately before the stable operation. In Fig.4, the time on the horizontal axis is shown with time t=0 as a reference at the start-up of the operation of the compressor similarly to Fig. 3.

The heat pump apparatus 1 shown in Fig. 4 has a wider operating temperature range than the heat pump apparatus 1 in Fig. 3. In other words, the outside air temperature range of the environment in which the heat pump apparatus 1 shown in Fig. 4 is installed is wider than that of Fig. 3. In the heat pump apparatus 1 shown in Fig. 4, the outside air temperature range in the environment where the heat pump apparatus 1 is installed is wide on the low temperature side. In Fig. 4, for reference, the chain line G indicates a case of the detection temperature of the discharge temperature sensor 42 that has fallen off from the discharge pipe.

In the solid arrow region F immediately after the start-up of the refrigeration cycle 5, the temperature TD of the refrigerant immediately after being discharged from the compressor 11 is lower than the temperature TC of the refrigerant after passing through the first heat exchanger 13, similarly to the case of Fig. 3.

In addition to the above-described problem of erroneous determination peculiar to the heat pump type heat source apparatus, it can be seen as shown in Fig. 4 that the time during which the temperature relationship of "temperature TD < temperature TC" continues immediately after the start-up of the refrigeration cycle 5 differs depending on the environment where the heat pump apparatus 1 is installed. In the case of Fig. 4 in which the outside air temperature of the usage environment lasts longer on the low temperature side as compared with the case of Fig. 3, the solid arrow area F is expanded, i.e., the duration in which the temperature relationship of "temperature TD < temperature TC" is satisfied is prolonged.

Thus, regardless of the operating temperature range of heat pump apparatus 1 (i.e., temperature conditions of the installation environment) and the capacity of the refrigeration cycle 5, when the predetermined waiting time after the start-up of the compressor 11 is set, there is a possibility of detecting the relationship of "temperature TD < temperature TC" after elapse of the waiting time and erroneously determining the dropout of the discharge temperature sensor 42, regardless of whether the discharge temperature sensor 42 is actually dropped or not.

Hence, after elapse of the predetermined waiting time from the start-up of the compressor 11, the controller 29 of the heat pump apparatus 1 according to the present embodiment determines whether the discharge temperature sensor 42 has fallen off from the pipe on the discharge side of the compressor 11 or not, on the basis of the difference obtained by subtracting the temperature TC of the refrigerant subjected to heat exchange from the discharge temperature TD. In this manner, the controller 29 can accurately determine whether the discharge temperature sensor 42 has fallen off or not in an early stage regardless of the operating temperature range (i.e., temperature conditions of the installation environment) and the capacity of the refrigeration cycle 5.

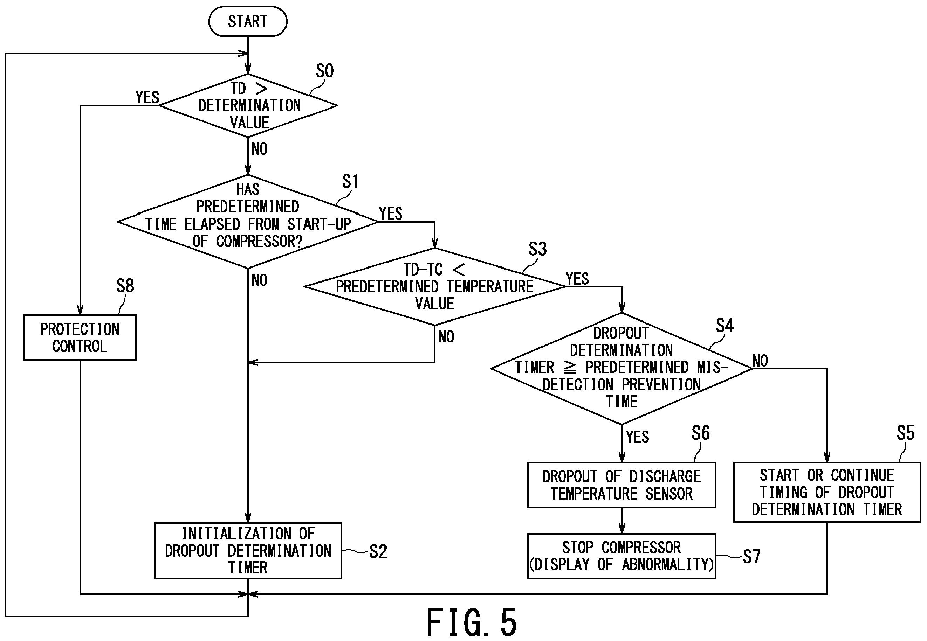

On the basis of the flowchart of Fig. 5, a description will be given of the control that is executed by the heat pump type heat source apparatus according to the embodiment of the present invention, using the discharge temperature sensor.

The controller 29 of the heat pump apparatus 1 according to the present embodiment starts the control based on the discharge temperature sensor. First, the controller 29 starts the compressor 11 and simultaneously starts timing (i.e., clocking) the operation time of the compressor 11.

In the subsequent step S0, for protection from abnormally high voltage, it is determined whether the detection temperature TD of the discharge temperature sensor 42 exceeds the determination value having been set for detection of high voltage abnormality, for example, 125°C or not.

If the detected temperature TD exceeds the determination value (YES in the step S0), the processing proceeds to the step S8 in which the controller 29 determines that the compressor 11 has reached the abnormally high voltage and executes the protection control for the compressor 11. This protection control can take various forms, as exemplified by reducing the output frequency of the inverter 25 to be driven, opening the opening of the expansion valve 15, and reducing the load on the compressor 11 including stopping the compressor 11.

If the detected temperature TD does not exceed the determination value (NO in the step S0), the operation of the compressor 11 is continued and the processing shifts to the dropout determination control of the discharge temperature sensor from the step S1. The high-pressure abnormality of compressor 11 is often caused by a transient increase in load due to the surrounding environment. Thus, if the load is reduced, the operation of the compressor 11 can be continued. In addition, when the compressor 11 is once stopped and then restarted, the surrounding environment may change and continuous operation may be allowed without reaching abnormally high pressure, so it is not necessarily required to immediately prohibit the operation of the compressor 11.

In the step S1, the controller 29 determines whether the predetermined waiting time has elapsed from the start-up of the compressor 11 or not. If the determination of the step S1 is negative, i.e., if the predetermined waiting time has not elapsed from the start-up of the compressor 11 (No in the step S1), the processing proceeds to the step S2 in which the controller 29 initializes (i.e., zeros) the timing of the dropout determination timer (S2) so as to complete the dropout determination control of the discharge temperature sensor, and then the processing returns to the start. The dropout determination timer is another timer provided in addition to the timer for clocking the operation time of the compressor 11.

If the determination of the step S1 is positive, i.e., if the predetermined waiting time has elapsed from the start-up of the compressor 11 (Yes in the step S1), the controller 29 determines in the step S3 whether the difference obtained by subtracting the temperature TC of the refrigerant subjected to heat exchange from the discharge temperature TD (i.e., "discharge temperature TD - temperature TC") is smaller than the predetermined temperature value or not. The method for determining the predetermined temperature value in this step S3 will be described below.

If the determination of the step S3 is negative, i.e., if the condition of "discharge temperature TD - refrigerant temperature TC after heat exchange ≥ predetermined temperature value" is satisfied (No in the step S3), the timing of the dropout determination timer is initialized (i.e., zeroed) in the step S2 and the processing returns to the beginning (i.e., step S0).

If the determination of the step S3 is positive, i.e., if the condition of "discharge temperature TD - refrigerant temperature TC after heat exchange < predetermined temperature value" is satisfied (YES in the step S3), the controller 29 determines in the step S4 whether the dropout determination timer indicates a time longer than a predetermined misdetection prevention time or not. The misdetection prevention time is set to prevent and avoid erroneous determination when instantaneous noise occurs in the output of the sensors including the discharge temperature sensor 42. The misdetection prevention time is set to, for example, 10 seconds.

If the determination of the step S4 is negative, i.e., if the dropout determination timer indicates a time shorter than the predetermined misdetection prevention time (No in the step S4), the controller 29 starts or continues timing of the dropout determination timer in the step S5, and then the processing returns to the beginning.

If the determination of the step S4 is positive, i.e., if the dropout determination timer indicates a time equal to or longer than the predetermined misdetection prevention time (YES in the step S4), the controller 29 determines in the step S6 that the discharge temperature sensor 42 has fallen off, i.e., it is in the state where the discharge temperature TD cannot be detected normally. Subsequently, in the step S7, the controller 29 stops the compressor 11 so as to stop the heat pump apparatus 1 for protecting the refrigeration cycle components, causes the display 28 to display the abnormality of the dropout of the discharge temperature sensor 42, and then completes the dropout determination control. After the step S7, the operation of the heat pump apparatus 1 is prohibited until a serviceman completes the repair of the dropout of the discharge temperature sensor 42 and resets the heat pump apparatus 1.

When the compressor 11 is operated under the state where the outside air temperature is at 2 degrees Celsius and the discharge temperature sensor 42 is dropped, after elapse of about 1200 seconds (20 minutes) from the start-up of the compressor 11, the pressure Pd of the refrigerant to be discharged from the compressor 11 may deviate from the usage range of the compressor 11 (allowable maximum pressure Pmax point in Fig. 3). The pressure Pmax corresponds to around 125°C when converted to the discharge temperature TD. When the outside air temperature rises above 2 degrees Celsius, the pressure Pd of the refrigerant to be discharged from the compressor 11 becomes further higher, and consequently, the time required for the pressure Pd of the refrigerant to be discharged from the compressor 11 to deviate from the usage range of the compressor 11 becomes shorter.

In addition, the duration of satisfying the condition of "temperature TD < temperature TC" is longer in the case of starting the compressor 11 under the state where the outside air temperature is -10 degrees Celsius than in the case of starting the compressor 11 under the state where the outside air temperature is 2 degrees Celsius (Fig. 3 and Fig. 4). In other words, as the outside air temperature becomes lower, it prolongs the duration of satisfying the condition of "temperature TD < temperature TC", i.e., prolongs the period during which the temperature relationship involving a possibility of erroneously determining the dropout of the discharge temperature sensor 42 after the start-up of the compressor 11 appears.

Thus, the predetermined waiting time in the step S1 is preferably a short period shorter than 1200 seconds from the start-up of the compressor 11. On the other hand, if the predetermined waiting time is set to an extremely short time, there is a possibility that the dropout determination of the discharge temperature sensor 42 based on the temperature relationship of "temperature TD < temperature TC" is incorrectly performed.

Additionally, in the case of starting the compressor 11 under the state where the outside air temperature is -10 degrees Celsius, "temperature TD - temperature TC" has the maximum temperature difference of approximately -20 degrees Celsius (Fig. 4). Further, in the case of detecting the condition of "temperature TD - temperature TC < determination margin M" and then determining the dropout of the discharge temperature sensor 42, the determination can be performed in an earlier stage than the case of simply detecting the magnitude relationship of "temperature TD) < temperature TC" and then determining the dropout of the discharge temperature sensor 42. In other words, the determination margin M in "temperature TD - temperature TC < determination margin M" has the effect of shortening the erroneous determination period for the dropout of the discharge temperature sensor 42 immediately after the start-up of the compressor 11 as indicated by the solid arrow α in Fig. 4. This determination margin M corresponds to the temperature difference of "temperature TD - temperature TC" in the step S3 of the control flowchart of Fig. 5.

Accordingly, the predetermined waiting time in the step S1 is set to 600 seconds (i.e., 10 minutes), which is half of the above-described 1200 seconds, assuming that the ascending speed of the high voltage is high. At the time point of this 600 seconds, the predetermined temperature value in the step S3, i.e., the determination margin M is set such that the dropout of the discharge temperature sensor can be reliably detected, i.e., misdetection is not performed. Thus, under the condition where the outside air temperature is the lowest in the operable range and the water temperature in the hot water tank 51 is high (i.e., under the condition where the setting temperature is set to the highest value via the operation interface 26), a value slightly higher than the temperature difference of "temperature TD - temperature TC" at the time point after elapse of 600 seconds from the start-up of the compressor 11 is set as the predetermined temperature.

According to this idea, the inventors of the present invention have found out that to set the determination margin M to -10 degrees shortens the predetermined waiting time in the step S1 and avoids erroneous determination of the dropout of the discharge temperature sensor 42 in the heat pump type heat source apparatus 1 that can operate even at a low outside-air temperature. In the heat pump type heat source apparatus 1, the predetermined temperature value, i.e., the determination margin M is required to be a negative value, and such a setting shortens the predetermined waiting time and avoids erroneous determination of the dropout of the discharge temperature sensor 42.

That is, the inventors of the present invention have confirmed the following. Although the predetermined waiting time in the step S1 and the predetermined temperature value in the step S3 differ depending on the capacity of the refrigeration cycle 5 and the specifications required for the load unit 3, setting the predetermined waiting time to 600 seconds and setting the predetermined temperature value in the step S3 to -10 degrees enables the heat pump apparatus 1 to satisfy a wide range of requirements in terms of both of the capacity of the refrigeration cycle 5 and the specifications of the load unit 3.

The notification in the steps S7 and S8 is not limited to the mode of visually notifying the error by light on the display 28 and may be another mode of notifying the error by sound like a speaker. In other words, it is sufficient if the controller 29 is provided with an alarm (such as the display 28) that notifies the error by at least one of sound or light.

If the controller 29 determines that the discharge temperature sensor 42 have fallen off from the pipe on the discharge side of the compressor 11 in the step S6, the controller 29 prohibits the restart of the compressor 11 until the serviceman repairs and installs the discharge temperature sensor 42 and resets the controller 29. In the step S0, after the detection temperature TD of the discharge temperature sensor 42 exceeds the determination value and the compressor 11 is stopped, the compressor 11 may be automatically restarted after a predetermined time. After that, if a high-voltage abnormality is detected repeatedly in a short period of time, for example, three times or more in two hours, the subsequent restart of the compressor 11 may be prohibited and the abnormality notification may be performed.

As described above, when the difference obtained by subtracting the refrigerant temperature TC subjected to heat exchange from the discharge temperature TD is smaller than the predetermined temperature value after elapse of the predetermined waiting time from the start-up of the compressor 11, the heat pump type heat source apparatus 1 according to the present embodiment determines that the discharge temperature sensor 42 has fallen from the pipe on the discharge side of compressor 11, and stops the compressor 11. Thus, the heat pump type heat source apparatus 1 can satisfy a wide range of requirements in terms of both of the capacity of the refrigeration cycle 5 and the specifications of the load unit 3 and can reliably determine the dropout of the discharge temperature sensor 42 at an early stage. In addition, the heat pump apparatus 1 reliably determines the dropout of the discharge temperature sensor 42 at an early stage before reaching an abnormally high pressure so as to stop the compressor 11, and thereby can reliably prevent the pressure Pd of the refrigerant from deviating from the usage range of the compressor 11 without providing a pressure sensor.

In addition, when the heat pump apparatus 1 according to the present embodiment 1 determines that the discharge temperature sensor 42 has fallen off from the pipe on the discharge side of the compressor 11, the heat pump apparatus 1 notifies the error by at least one of sound and light. Thus, the heat pump apparatus 1 can reliably determine the dropout of the discharge temperature sensor 42 at an early stage, and can readily make the user aware that the discharge temperature sensor 42 has fallen off.

Further, when the heat pump apparatus 1 according to the present embodiment determines that the discharge temperature sensor 42 has fallen off from the pipe on the discharge side of the compressor 11, the heat pump apparatus 1 prohibits the restart of the compressor 11. Thus, the heat pump apparatus 1 can reliably determine the dropout of the discharge temperature sensor 42 at an early stage, and can reliably prevent the situation where the pressure Pd of the refrigerant deviates from the usage range of the compressor 11 while the compressor 11 being operated with the discharge temperature sensor 42 fallen off.

Hence, the heat pump apparatus 1 according to the present embodiment can more reliably detect the dropout of the discharge temperature sensor 42 configured to detect the discharge temperature TD of the compressor 11 by using the existing temperature sensor in the heat pump apparatus 1.

While certain embodiments have been described, these embodiments have been presented by way of example only, and are not intended to limit the scope of the inventions.

Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### List of References

- 1: heat pump type heat source apparatus
- 2: heat source unit
- 3: load unit
- 5: refrigeration cycle
- 11: compressor
- 13: first heat exchanger
- 15: expansion valve
- 16: second heat exchanger 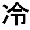
- 17: refrigerant piping
- 21: blower fan
- 25: inverter
- 26: operation interface
- 27: utilization-side device
- 28: display
- 29: controller
- 41: suction temperature sensor
- 42: discharge temperature sensor
- 43: refrigerant-outlet-side temperature sensor
- 45: refrigerant temperature sensor
- 52: utilization-side heat exchanger

## Claims

1. A heat pump type heat source apparatus (1) comprising:
a refrigeration cycle (5) that includes a compressor (11), a first heat exchanger (13), an expansion device (15), and a second heat exchanger (16);
a heat-medium flow passage (58) that is connected to the first heat exchanger (13) of the refrigeration cycle (5) as a flow passage of a heat medium circulating via the first heat exchanger (13);
a discharge temperature sensor (42) that is provided in piping on a discharge side of the compressor (11) and detects a discharge temperature;
a first-heat-exchanger outlet-side temperature sensor (43) configured to detect a temperature of a heat-exchanged refrigerant flowing out of the first heat exchanger (13); and
a controller (29) configured to stop the compressor (11) when a difference obtained by subtracting the temperature of a heat-exchanged refrigerant from the discharge temperature is smaller than a predetermined temperature value after elapse of a predetermined waiting time from start-up of the compressor (11).

2. The heat pump type heat source apparatus (1) according to claim 1, further comprising an alarm (28) configured to notify an error by at least one of sound or light when the difference obtained by subtracting the temperature of a heat-exchanged refrigerant from the discharge temperature is smaller than the predetermined temperature value after elapse of the predetermined waiting time from start-up of the compressor (11).

3. The heat pump type heat source apparatus (1) according to claim 1 or claim 2, wherein the controller (29) is configured to prohibit restart of the compressor (11) after the compressor (11) is stopped.

4. The heat pump type heat source apparatus (1) according to any one of claim 1 to claim 3, wherein the controller (29) is configured to execute protection control of protecting the compressor (11) from abnormal pressure regardless of the difference obtained by subtracting the temperature of a heat-exchanged refrigerant from the discharge temperature, when the discharge temperature detected by the discharge temperature sensor (42) is equal to or higher than a predetermined value.

5. The heat pump type heat source apparatus (1) according to claim 4, wherein the controller (29) is configured to stop the compressor (11) as the protection control.

6. The heat pump type heat source apparatus (1) according to claim 4, further comprising an inverter (25) configured to drive the compressor (11) at variable speeds,
wherein the controller (29) is configured to decrease an output frequency of the inverter (25) as the protection control.

7. The heat pump type heat source apparatus (1) according to any one of claim 1 to claim 6, wherein the predetermined temperature value is a negative value.

8. The heat pump type heat source apparatus (1) according to any one of claim 1 to claim 7, further comprising a utilization-side device (27) that is connected to the first heat exchanger (13) of the refrigeration cycle (5) via the heat-medium flow passage (58) and uses the heat medium subjected to heat exchange in the first heat exchanger (13) as a heat source.

9. The heat pump type heat source apparatus (1) according to claim 8, wherein the utilization-side device (27) is a hot water tank (51) configured to storage hot water, and to heat the hot water through heat exchange with the heat medium.

10. The heat pump type heat source apparatus (1) according to any one of claim 1 to claim 9, wherein the heat medium is water.
